# EUROPEAN PATENT SPECIFICATION

(11) **EP 2 777 406 B1**
(45) Date of publication and mention of the grant of the patent: **01.07.2015**
(21) Application number: 13001334.5
(22) Date of filing: 15.03.2013
(51) Int. Cl.: A23P 1/08, B65G 49/04, B65G 15/10

(54) **Food processing machine**
Nahrungsmittelverarbeitungsmaschine
Machine de traitement de produits alimentaires

(43) Date of publication of application: 17.09.2014
(73) Proprietor: TS Techniek BV, 2641 KS Pijnacker (NL)
(72) Inventor: Van Leeuwen, Ivar, 2743EM Waddinxveen (NL); Van Zweden, Dennis, 2727BX Zoetermeer (NL)
(74) Representative: Beier, Ralph

(56) References cited:
- WO-A1-2006/103244
- US-A1- 2002 020 343
- US-A1- 2003 000 394
- US-A1- 2004 083 901
- US-A1- 2005 169 099
- US-B1- 6 315 100

## Description

### Field of the invention

The invention relates to a food processing machine for processing food products, particularly seafood or vegetables for producing tempura.

### Background of the invention

Food processing machines for producing tempura are disclosed, for example, in EP 1 106 067 A1, US 2003/0000394 A1 and WO 2006/103244 A1. The conventional food processing machines for producing tempura comprise a dipping bath containing a semi-liquid batter and a conveyor arrangement for conveying the food products (e.g. seafood or vegetables) through the dipping bath, so that the food products are coated with the batter in the dipping bath. The conveyor arrangement typically comprises wire belt conveyors for dipping the food products into the dipping bath. One advantage of wire belt conveyors as used in the conventional food processing machines is that they are permeable to the coating substance (e.g. batter). Another advantage of wire belt conveyors is that they are easy to clean.

However, the conventional food processing machines for producing tempura do not yield an entirely satisfactory coating result.

### Summary of the invention

It is therefore an object of the invention to provide an improved food processing machine for producing tempura. Further, it is an object of the invention to provide an improved method of operation of such a food processing machine.

These objects are achieved by the food processing machine and the method of operation according to the independent claims.

The inventors have recognized that the coating result is affected by the friction between the tempura and the conveyor belt on the one hand and the friction between the food product (e.g. seafood, vegetables) and the conveyor belt on the other hand. Further, the inventors have recognized that conventional wire belt conveyors are not entirely satisfactory since they provide too much friction between the tempura and the wire belt. Therefore, the food processing machine according to the invention comprises a round belt conveyor for dipping the food products (e.g. seafood or vegetables) into the dipping bath. These round belt conveyors have less grip on the tempura while the product has still enough grip on the conveyor. The round belt conveyor preferably comprises several parallel round strings each having a round cross-section, wherein the cross-section is preferably circular. Further, the round belt is preferably made of plastics. However, it should be noted that the round belt conveyor according to the invention is also permeable to the coating substance (e.g. batter) which is essential in order to achieve a satisfactory coating result.

Further, it should be noted that the food processing machine according to the invention can also be used for processing other food products than seafood or vegetables. For example, is also possible to process poultry, beef or meat.

In a preferred embodiment of the invention, the conveyor arrangement comprises an input conveyor, a first transfer conveyor, a dipping conveyor, a second transfer conveyor and finally an output conveyor, which are arranged one behind another.

The input conveyor receives the uncoated food products from another machine or via a conveyor line. The input conveyor preferably comprises an adjustable inclination.

The first transfer conveyor receives the uncoated food products from the input conveyor and transfers the uncoated food products to the dipping conveyor.

The dipping conveyor receives the uncoated food products from the first transfer conveyor and conveys the food products through the dipping bath so that the food products are coated within the dipping bath. Further, the dipping conveyor also removes the coated food products from the dipping bath.

The second transfer conveyor receives the coated food products from the dipping conveyor and transfers them to the output conveyor.

Finally, the output conveyor receives the food products from the second transfer conveyor and discharges the coated food products. In this connection, it should be noted that the output conveyor preferably comprises an adjustable inclination.

The dipping conveyor preferably comprises a round belt conveyor, while the other conveyors preferable comprise conventional wire belt conveyors.

Further, the output conveyor preferably comprises an adjustable output end which can be adjusted between a sharp nose configuration and a butt nose configuration. To allow such an adjustable output configuration of the output conveyor, the output conveyor preferably comprises an upper roller and a lower roller at the output end of the output conveyor, wherein the lower roller can be shifted in the conveying direction in order to adjust either the butt nose position or the sharp nose position of the output end of the output conveyor. If a sharp nose configuration of the output end is desired, the lower roller is pushed forward ahead of the upper roller. However, if a butt nose configuration of the output end is desired, the lower roller is retracted behind the upper roller.

In the preferred embodiment of the invention, the dipping conveyor comprises an upper conveyor and a lower conveyor, wherein the upper conveyor is preferably moveable between a lowered operating position and a raised maintenance position allowing access to the lower conveyor. The upper conveyor and the lower conveyor together form a product channel in between wherein the distance between the upper conveyor and the lower conveyor defines the height of the product channel. The product channel runs through the dipping bath so that the complete cross-section of the product channel is completely under the filling level in the dipping bath at least at one point of the product channel. In other words, the product channel goes down so deep into the dipping bath that the food products entirely submerge into the batter.

Further, it should be noted that the product channel preferably has an adjustable height which can be adapted to the size of the food products. The adjustment of the height of the product channel is preferably performed by adjusting the vertical position of the upper conveyor relative to the vertical position of the lower conveyor.

The food processing machine according to the invention preferably comprises a cooling apparatus for cooling the upper belt and/or the lower belt of the dipping conveyor. In the preferred embodiment of the invention, the cooling apparatus comprises an upper cooling labyrinth for cooling the upper conveyer hanging in the dipping bath and a lower cooling labyrinth for cooling the lower conveyor, wherein the lower cooling labyrinth is preferably arranged under the dipping bath.

It should further be noted that the dipping bath must be refilled with the liquid or semi-liquid food material (e.g. batter) from time to time. In the conventional food processing machines, such a refill of the dipping bath disrupts the operation of the food processing machine.

The food processing machine according to the invention solves this problem by providing an additional buffer for buffering the liquid or semi-liquid food material, wherein the buffer comprises an inlet for receiving the liquid or semi-liquid food material (e.g. batter) from an external source (e.g. a mixer) and an outlet for discharging the liquid or semi-liquid food material into the dipping bath. The buffer can easily be refilled with the food material without disrupting the operation of the food processing machine. Further, the buffer can discharge the liquid or semi-liquid food material into the dipping bath without disruption of the operation of the food processing machine.

Further, it should be noted that tempura batter has short shelf life. Particularly, the product quality of a tempura batter is not constant. Immediately after preparation of the tempura batter, the product quality is poor. Then, the product quality of the tempura rises to a point where it is good, and then passes again. With the buffer tank, the tempura can be delivered at the perfect time. Therefore, the buffer tank is not only a buffer to provide enough tempura at the right time but also to maintain the product quality of the tempura.

In the preferred embodiment of the invention, the buffer comprises a filling level sensor for measuring a filling level of the liquid or semi-liquid food material in the buffer. It is preferred to provide two filling level sensors one of which detecting a maximum filling level while the other filling level sensor detects a minimum filling level.

Further, the buffer preferably comprises an outlet valve for controlling the flow of the liquid or semi-liquid food material from the buffer into the dipping bath.

It should further be noted that the buffer is preferably arranged above the conveyor arrangement and preferably comprises several outlet openings being arranged across the conveyor arrangement, wherein the outlet valve preferably jointly opens or closes the outlet openings of the buffer. For example, this can be achieved by a pressure cylinder (e.g. hydraulic or pneumatic) moving a piston rod which in turn controls the outlet valves of the individual outlet openings of the buffer.

Further, the buffer preferably comprises a cleaning hatch which can be opened for cleaning the interior of the buffer.

Moreover, the buffer preferably comprises a safety hatch which can be moved between an opened maintenance position and a closed operating position. The position of the safety hatch can be detected by a sensor. Further, the safety hatch can also be used to deflect the flow of the liquid or semi-liquid food material leaving the outlet openings of the buffer.

It is also preferred to provide a temperature sensor for measuring a temperature associated to the temperature of the liquid or semi-liquid food material in the dipping bath. Therefore, the temperature sensor is preferably arranged at the bottom of the dipping bath.

Further, the food processing machine according to the invention preferably comprises at least one filling level sensor for measuring the filling level of the liquid or semi-liquid food material in the dipping bath. In the preferred embodiment of the invention, there are two filling level sensors, wherein the first filling level sensor detects a maximum filling level while the other filling level sensor detects a minimum filling level.

Moreover, the dipping bath preferably comprises a drain outlet and a drain valve arranged in the drain outlet for draining the dipping bath for maintenance and cleaning purposes.

Further, the food processing machine according to the invention preferably comprises a control unit for controlling the operation of the food processing machine.

At its input side, the control unit is preferably connected to the filling level sensor of the buffer and/or to the filling level sensor of the dipping bath, while the output side of the control unit is preferably connected to the outlet valve of the buffer, so that the control unit controls the filling level of the liquid or semi-liquid food material in the dipping bath. If the filling level in the dipping bath is too low, the control unit opens the outlet valve of the buffer so that the dipping bath is refilled with food material from the buffer. However, if the filling level of the food material in the dipping bath is too high or acceptable, the control unit closes the outlet valves of the buffer so that no food material is discharged from the buffer into the dipping bath.

Further, the input side of the control unit is preferably connected to the temperature sensor of the dipping bath, while the output side of the control unit is connected to the cooling apparatus, so that the control unit controls the temperature in the dipping bath. If the temperature exceeds a certain threshold, the control unit activates the cooling apparatus in order to avoid overheating. However, if the measured temperature is too low or acceptable, the control unit reduces the cooling power of the cooling apparatus or switches the cooling apparatus off.

Further, the food processing machine according to the invention preferably comprises at least one so-called air knife to blow off excess product after the coating of the food products in the dipping bath. These air knives are known from the state of the art.

Further, it should be noted that the invention also claims protection for a method of operation of such a food processing machine.

The invention and its particular features and advantages will become more apparent from the following detailed description considered with reference to the accompanying drawings.

### Brief description of the drawings

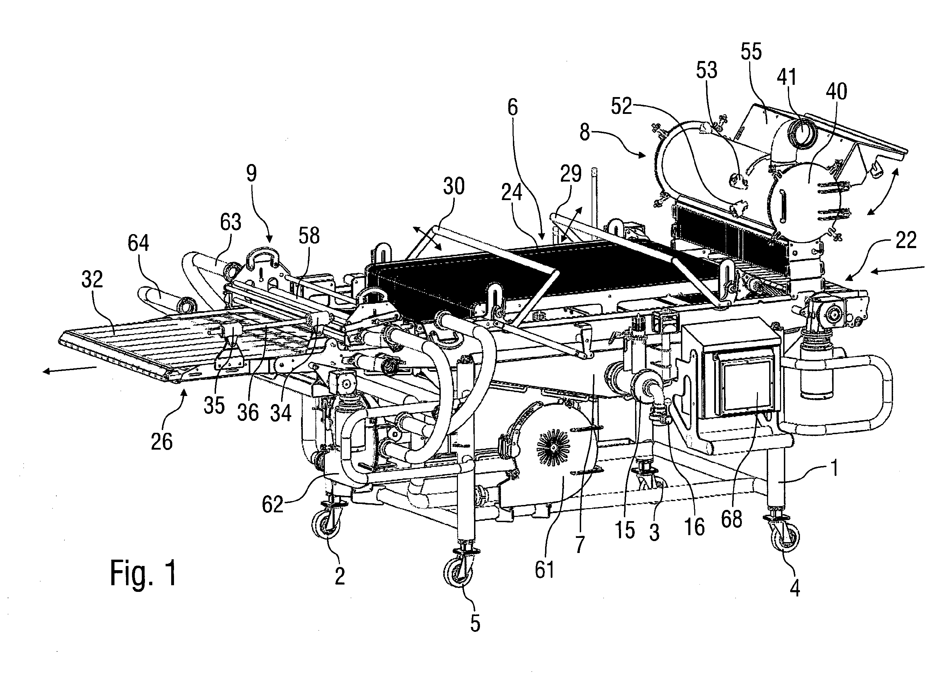

- Figure 1: is a perspective view of a preferred embodiment of a food processing machine for producing tempura.

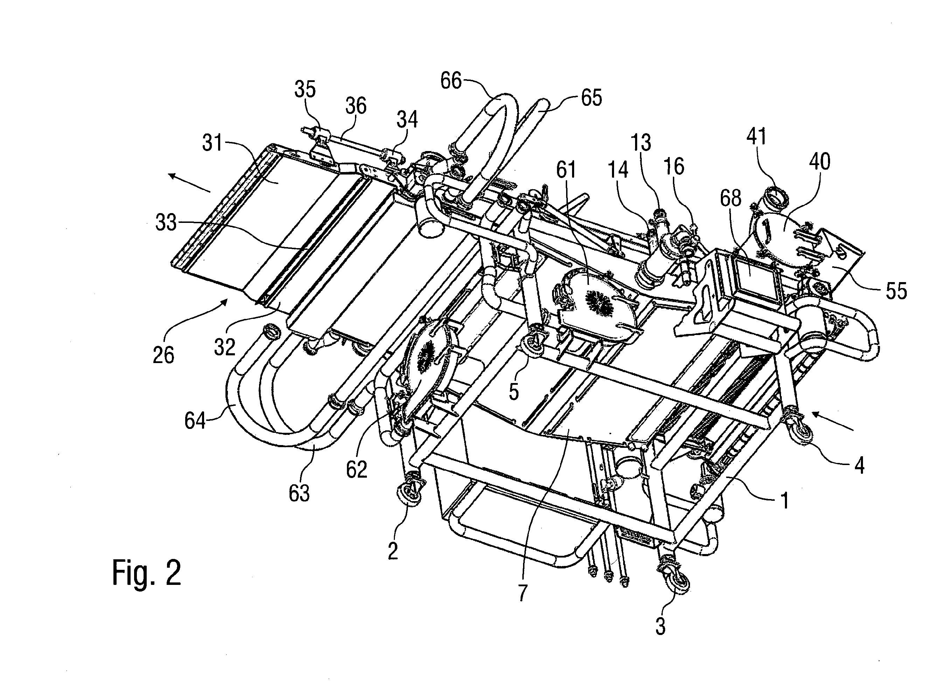

- Figure 2: is a perspective view of the machine according to Figure 1 from the bottom.

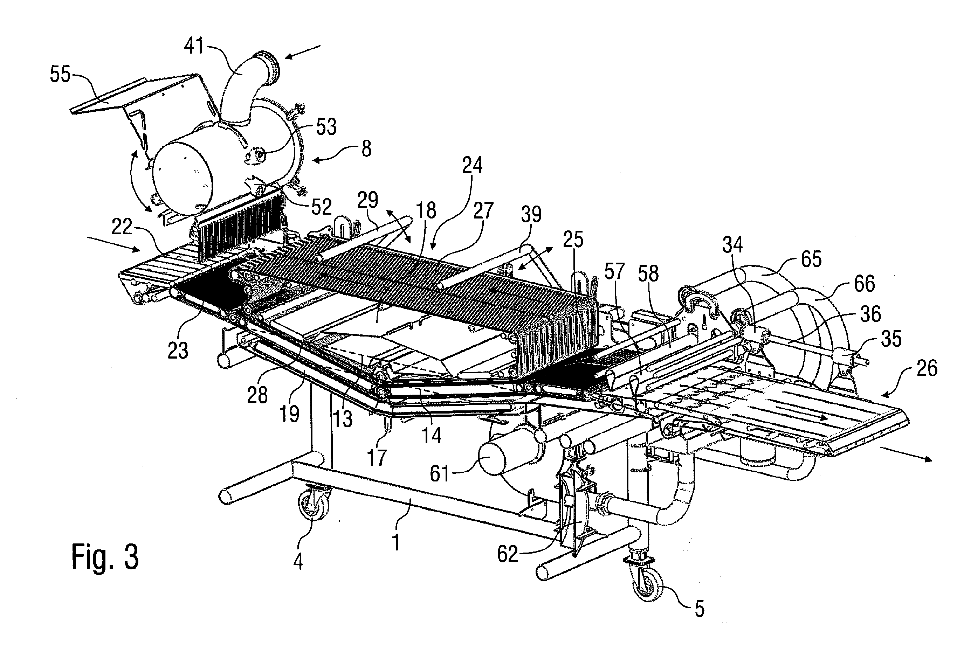

- Figure 3: is a partially cut-away perspective view of the food processing machine according to Figures 1 and 2.
- Figure 4: shows a perspective view of a buffer arrangement of the food processing machines as shown in Figures 1-3.
- Figure 5: shows a side view of the buffer arrangement as shown in Figure 4 with an opened safety hatch.
- Figure 6: shows a side view of the buffer arrangement, wherein the safety hatch is closed.
- Figure 7: shows a perspective view of the output conveyor of the food processing machine in a sharp nose configuration.
- Figure 8: shows a perspective view of the output conveyor in a butt nose configuration.

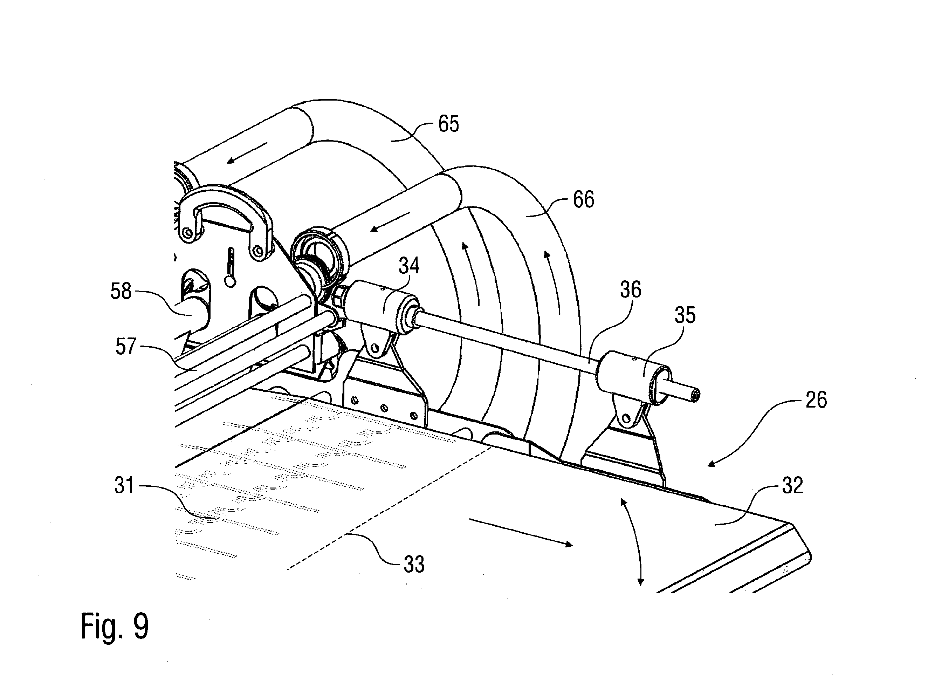

- Figure 9: shows a perspective view of the pivoting mechanism of the output conveyor.

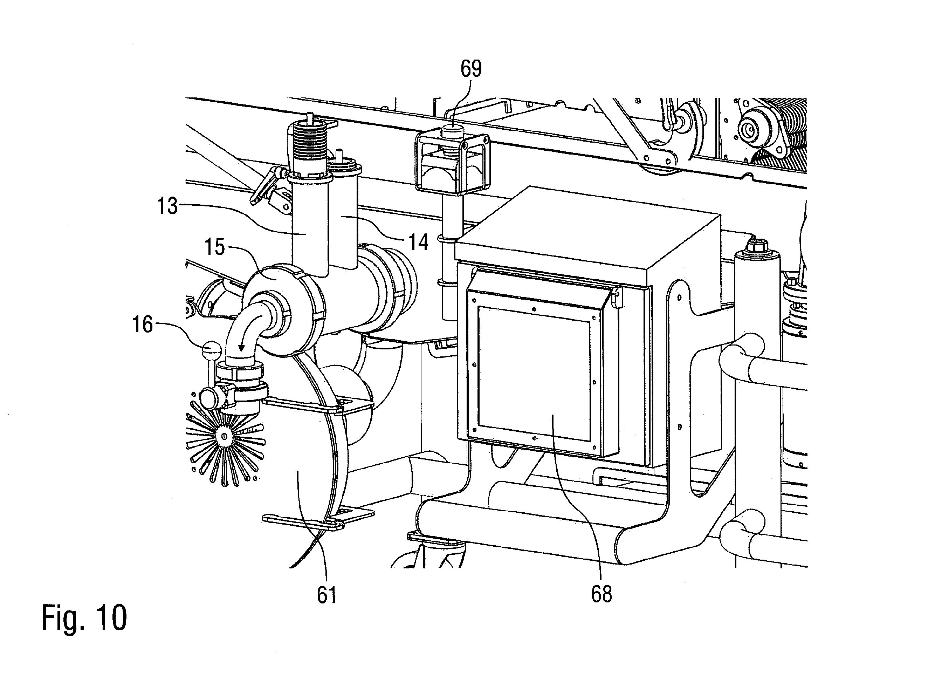

- Figure 10: shows a perspective view of the control panel and the filling level sensors of the dipping bath along with the drain outlet.

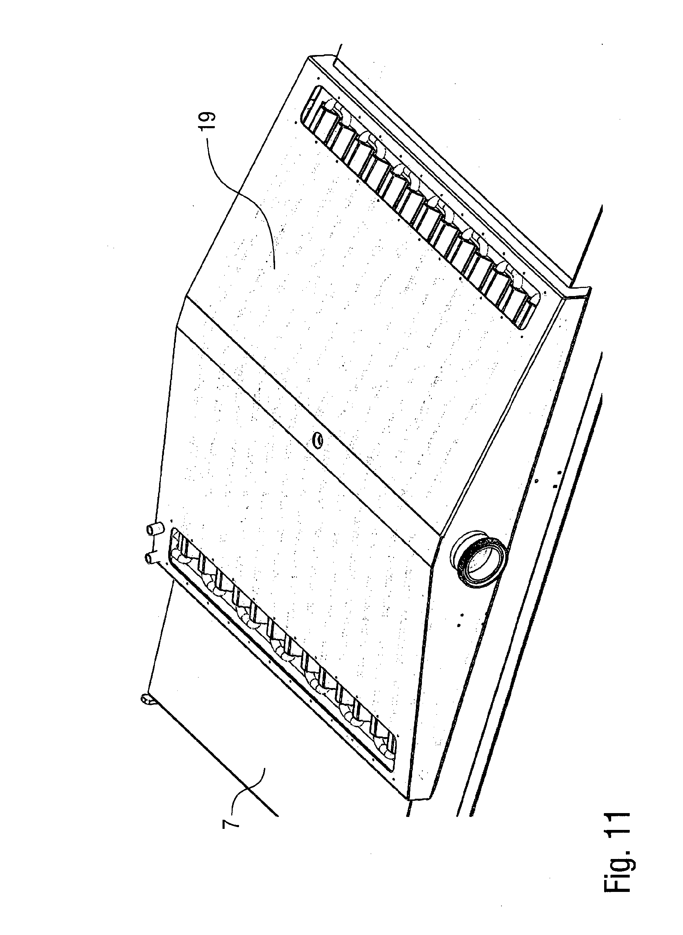

- Figure 11: shows the lower cooling labyrinth from below.

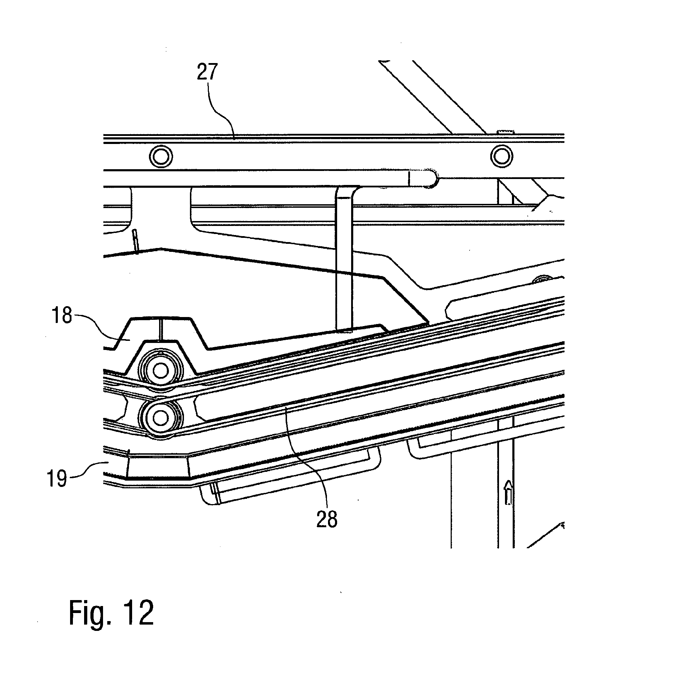

- Figure 12: shows a side view of the dipping conveyor with an upper cooling labyrinth.

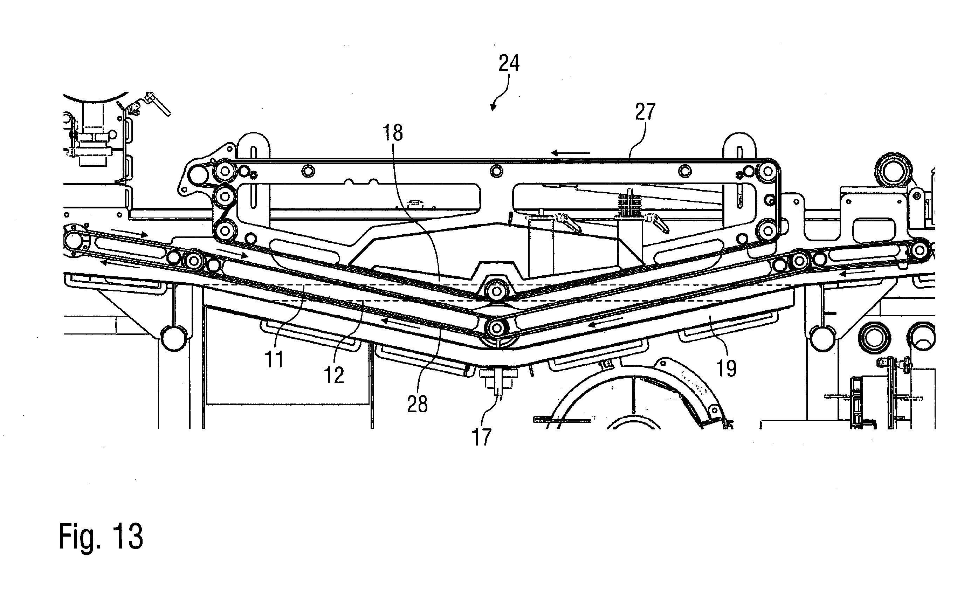

- Figure 13: shows another side view of the conveyor arrangement with the dipping conveyor.

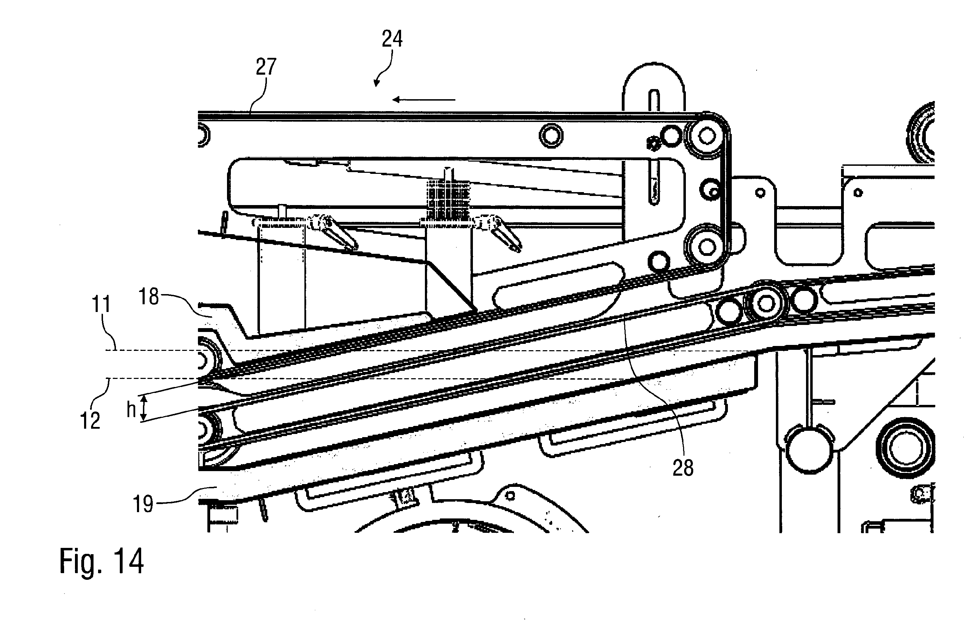

- Figure 14: shows another side view of the dipping conveyor.

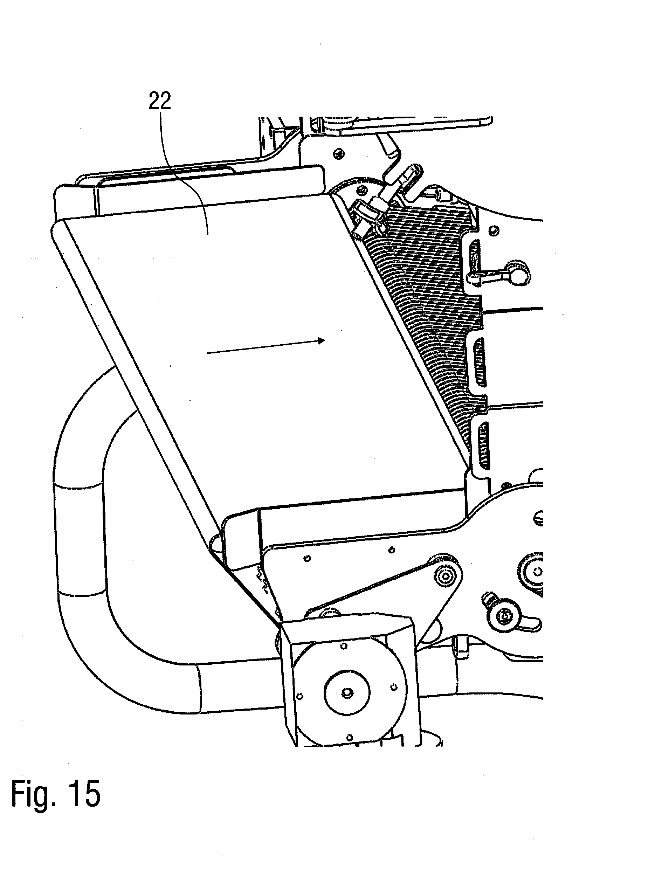

- Figure 15: shows a perspective view of the input conveyor.

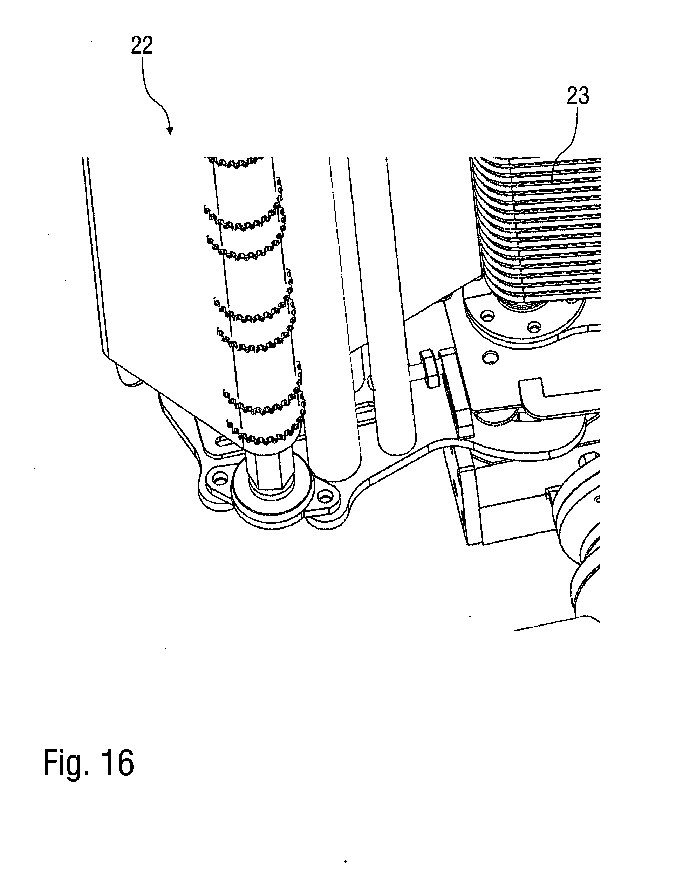

- Figure 16: shows a perspective view of the input conveyor from below.

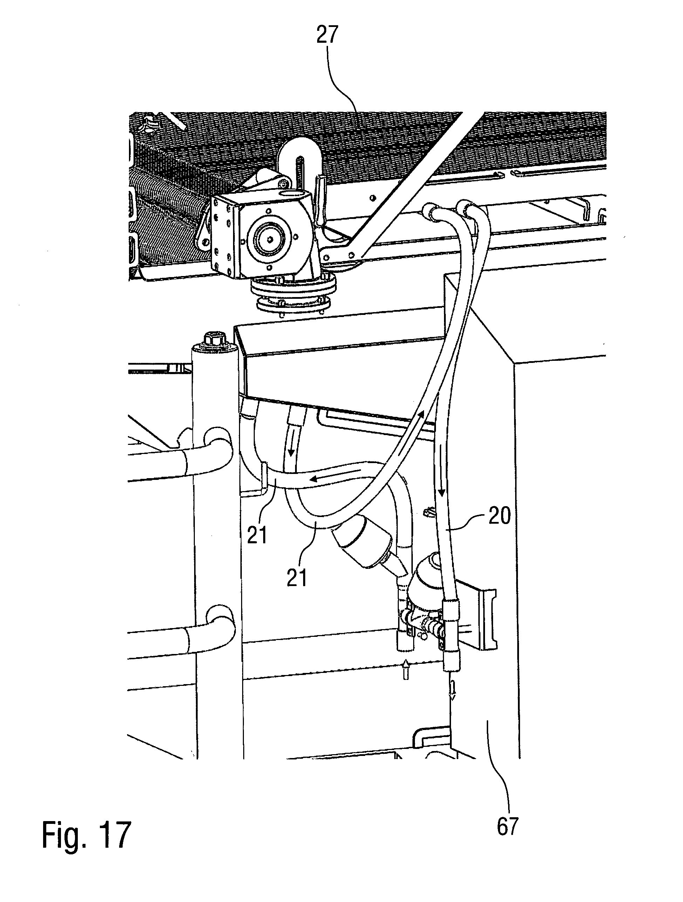

- Figure 17: shows tubes for providing and discharging coolant to and from the cooling labyrinth.

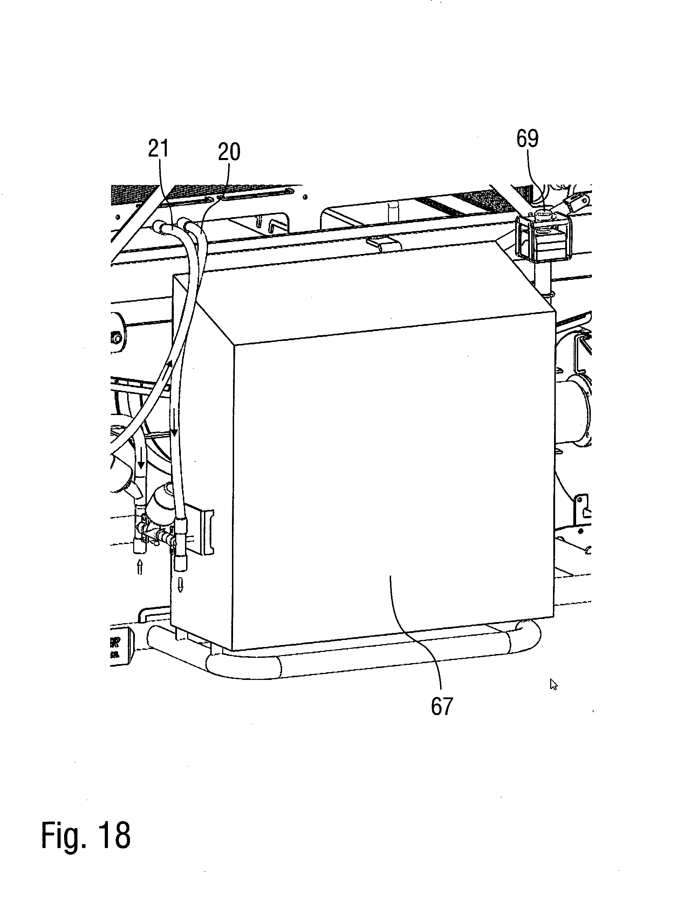

- Figure 18: shows a perspective view of an electrical cabinet of the food processing machine.

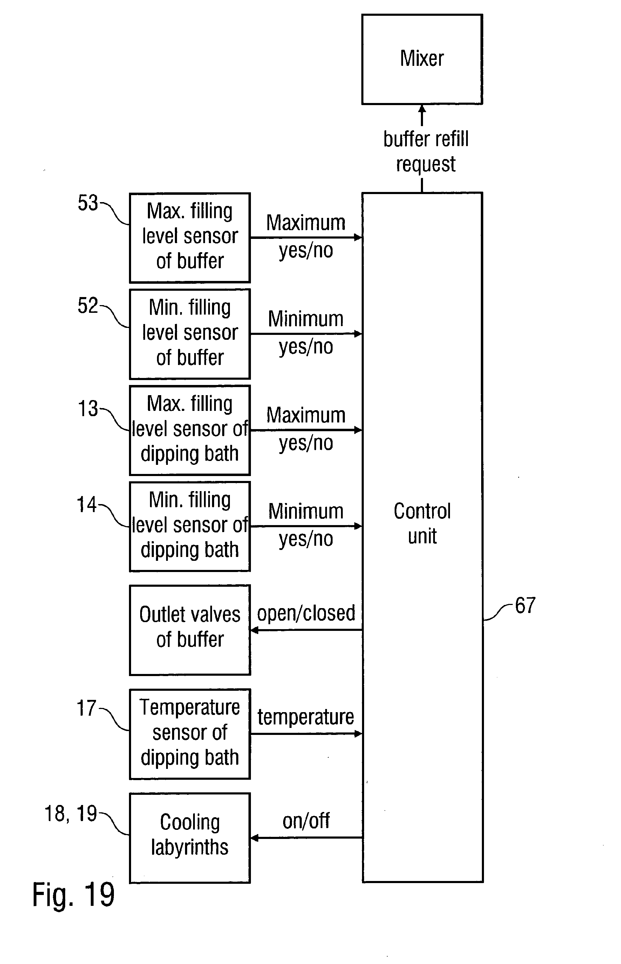

- Figure 19: shows a schematic block diagram of the food processing machine.

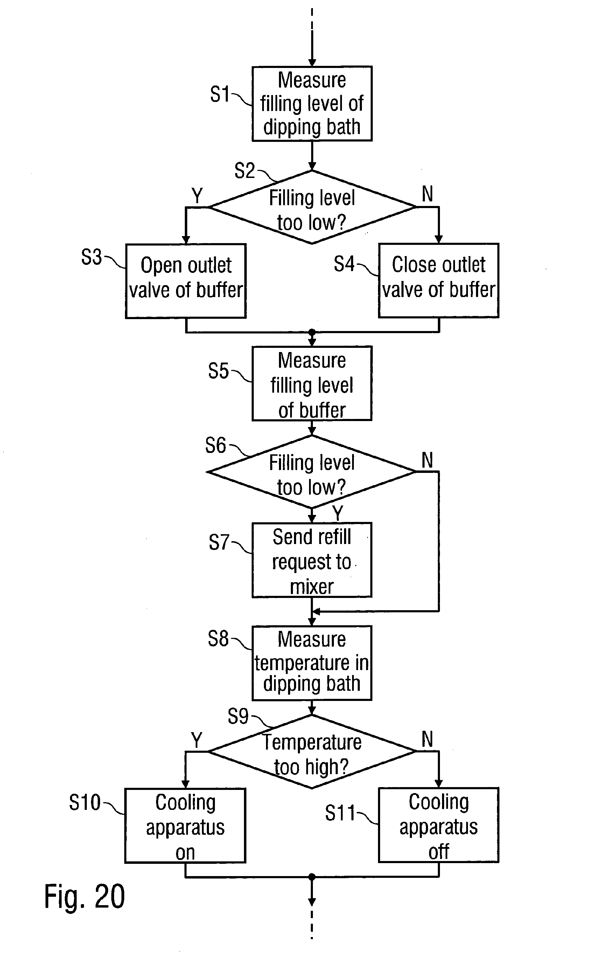

- Figure 20: shows a flow chart illustrating the method of operation of the food processing machine.

### Detailed description of the drawings

The drawings illustrate a preferred embodiment of a food processing machine for coating food products (e.g. seafood or vegetables) with a batter for producing tempura.

The food processing machine comprises a support frame 1 which is arranged on rolls 2-5 and which supports several sub assemblies, namely a conveyor arrangement 6, a dipping bath 7, a buffer arrangement 8, an air knife arrangement 9 and a control system 10 which will be described in the following.

### Dipping bath

The dipping bath 7 can be filled with the batter in order to coat the food products (e.g. seafood or vegetables) in the dipping bath 7. Therefore, the filling level of the batter in the dipping bath 7 must be maintained between a maximum filling level 11 and a minimum filling level 12. Therefore, the dipping bath 7 comprises a maximum filling level sensor 13 and a minimum filling level sensor 14. The maximum filling level sensor 13 responds when the actual filling level in the dipping bath 7 exceeds the maximum filling level 11. The minimum filling level sensor 14 responds when the actual filling level in the dipping bath exceeds the predetermined minimum filling level 12. During operation of the food processing machine, the actual filling level of the batter in the dipping bath 7 is always maintained between the maximum filling level 11 and the minimum filling level 12.

Further, the dipping bath 7 comprises a drain opening 15 and a drain valve 16 which is arranged in the drain outlet 15. The drain valve 16 can be manually actuated by a hand lever so that the drain valve 16 can be opened to drain the dipping bath 7 for maintenance or cleaning of the dipping bath 7.

Moreover, the dipping bath 7 comprises a temperature sensor 17 which is arranged at the bottom side of the dipping bath 7 and measures the temperature of the dipping bath 7. The output of the temperature sensor 17 can be used for control purposes which will be explained in more detail later.

Further, the dipping bath 7 comprises an upper cooling labyrinth 18 and a lower cooling labyrinth 19 which are connected to a coolant inlet tube 20 and a coolant outlet tube 21. The upper cooling labyrinth 18 and the lower cooling labyrinth 19 are used to cool the belts of the conveyor arrangement 6 within the dipping bath 7, which will be explained in more detail later.

### Conveyor arrangement

The conveyor arrangement 6 comprises an input conveyor 22 for receiving the uncoated food products (e.g. seafood or vegetables). The input conveyor 22 is a wire belt conveyor so that the input conveyor 22 is easy to clean and satisfies hygienic requirements. Further, the input conveyor 22 comprises an adjustable inclination which can be adapted according to a conveyor line arranged upstream the food processing machine.

Further, the conveyor arrangement 6 comprises a transfer conveyor 23 which is arranged downstream the input conveyor 22. The transfer conveyor 23 is also realized as a wire belt conveyor.

Moreover, the conveyor arrangement 6 comprises a dipping conveyor 24 which is arranged downstream the transfer conveyor 23. The dipping conveyor 24 conveys the uncoated food products through the dipping bath 7 so that the food products are coated within the dipping bath 7. Further, the dipping conveyor 24 then removes the coated food products from the dipping bath 7. The dipping conveyor 24 comprises round belt conveyors. This is advantageous since round belt conveyors have less grip on the tempura batter while the food products still have enough grip on the round belts. Therefore, the use of a round belt conveyor instead of a conventional wire belt conveyor yields a better coating result.

Another transfer conveyor 25 is arranged downstream the dipping conveyor 24, wherein the transfer conveyor 25 is also realized as a wire belt conveyor.

At the downstream end of the conveyor arrangement 6, an output conveyor 26 is arranged, which is also realized as a wire belt conveyor.

The dipping conveyor 24 actually comprises an upper dipping conveyor 27 and a lower dipping conveyor 28 which are arranged above each other and together form a product channel which runs through the dipping bath 7. The product channel between the upper dipping conveyor 27 and the lower dipping conveyor 28 comprises an adjustable height h which can be adapted to the size of the food products to be coated. The height h of the product channel can be adjusted by two adjustment levers 29, 30 which can be swivelled manually in order to adjust the height h of the product channel. Further, it should be noted that the upper dipping conveyor 27 can be swivelled upwards to provide access to the lower dipping conveyor 28 for maintenance or cleaning purposes.

The output conveyor 26 comprises an adjustable inclination which can be adapted to a conveyor line downstream the food processing machine. Therefore, the output conveyor 26 comprises an upstream section 31 and a downstream section 32, wherein the downstream section 32 of the output conveyor 26 can be swivelled relative to the upstream section 31 of the output conveyor 26 around a swivel axis 33.

Further, the output conveyor 26 comprises an adjustment mechanism for adjusting the inclination of the downstream section 32 relative to the upstream section 31. The adjustment mechanism comprises a guidance 34 mounted to the upstream section 32 and a guidance 35 mounted to the downstream section 32. A guiding rod 36 is slidable within the guidances 34, 35, wherein the guiding rod 36 can be fixed within the guidances 34, 35 at the desired position in order to adjust the inclination angle of the downstream section 32 of the output conveyor 26 relative to the upstream section 31 of the output conveyor 26.

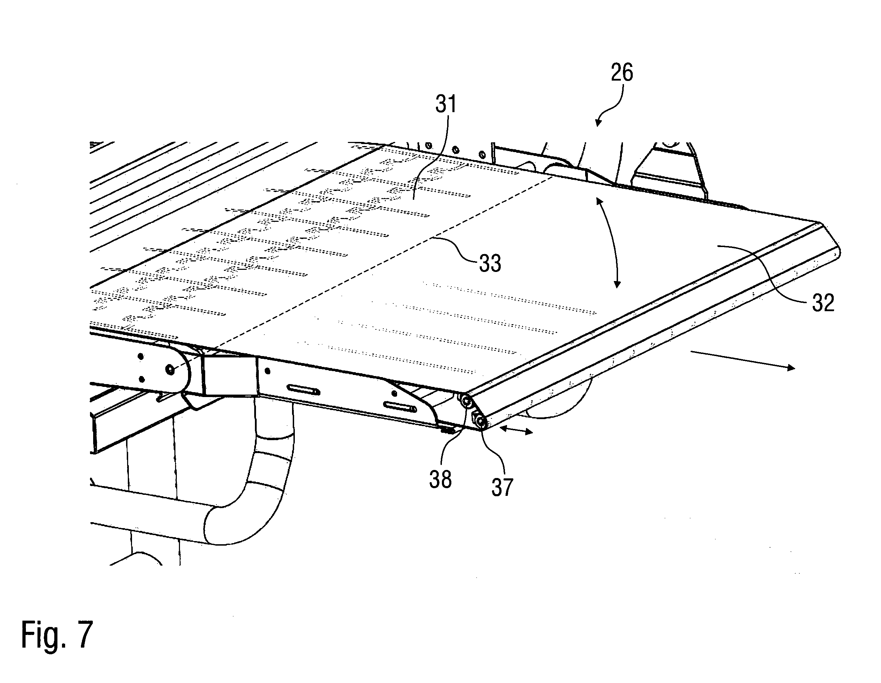

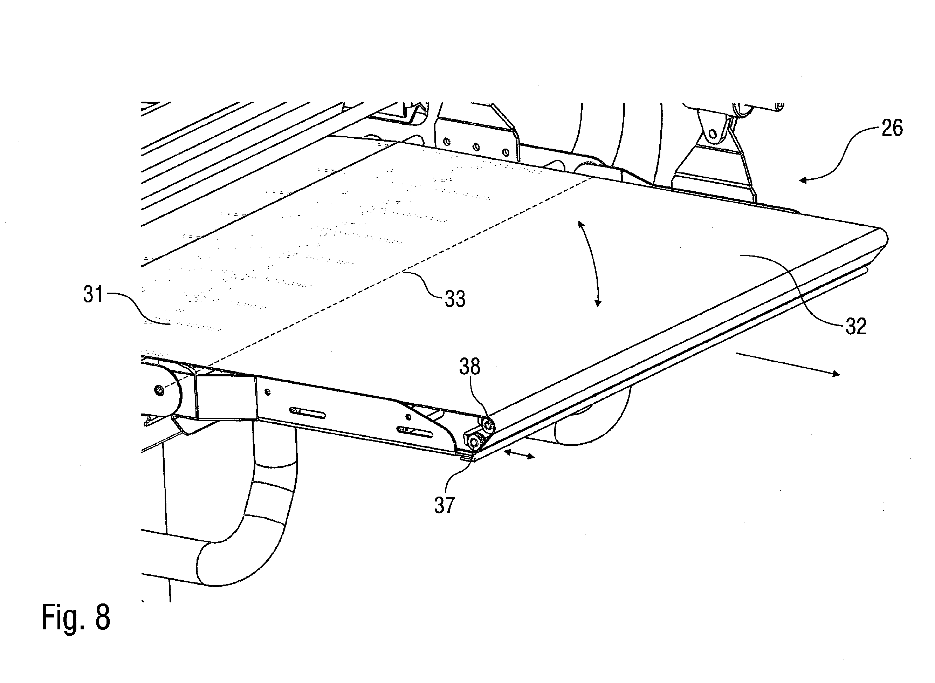

Moreover, the output conveyor 26 comprises an output end with an adjustable configuration. Figure 7 shows a sharp nose configuration of the output end of the output conveyor 26, while Figure 8 shows a butt nose configuration of the output end of the output conveyor 26. This is achieved by providing a lower roller 37 and an upper roller 38 at the output end of the output conveyor 26. The position of the upper roller 38 is fixed, while the position of the lower roller 37 can be changed in order to switch between the sharp nose configuration and the butt nose configuration. To adjust the sharp nose configuration as shown in Figure 7, the lower roller 37 is pushed forward in a downstream direction as shown in Figure 7. On the contrary, the lower roller 37 is retracted in an upstream direction in order to achieve the butt nose configuration as shown in Figure 8.

### Buffer arrangement

Further, the food processing machine according to the invention comprises the buffer arrangement 8 for buffering the batter between an external source (e.g. a mixer) and the dipping bath 7. This allows a continuous operation of the dipping bath 7 which can be refilled from the buffer arrangement.

The buffer arrangement 8 comprises a buffer tank 39 for receiving the batter from the external source (e.g. a mixer). The buffer tank 39 comprises a cleaning hatch 40 which is closed during operation and which can be opened manually for maintenance and cleaning purposes.

On its input side, the buffer tank 39 comprises an inlet 41 for introducing the batter into the buffer tank 39.

On its output side, the buffer tank 39 comprises several outlets 42, 43, 44, 45 for discharging the batter from the buffer tank 39. The outlets 42-45 can be opened or closed by integrated valves which can be actuated by a pressure cylinder 46 via a piston rod 47 and valve levers 48-51 associated to the individual outlets 42-45.

Further, the buffer arrangement 8 comprises a lower filling level sensor 52 and an upper filling level sensor 53. The lower filling level sensor responds when a filling level 54 of the batter in the buffer tank 39 exceeds a predetermined minimum filling level. The upper filling level sensor 53 responds if the filling level 54 of the batter in the buffer tank 39 exceeds a predetermined maximum filling level. Therefore, the filling level 54 of the batter in the buffer tank 39 will be maintained between the maximum filling level and the minimum filling level which will be explained in more detail later.

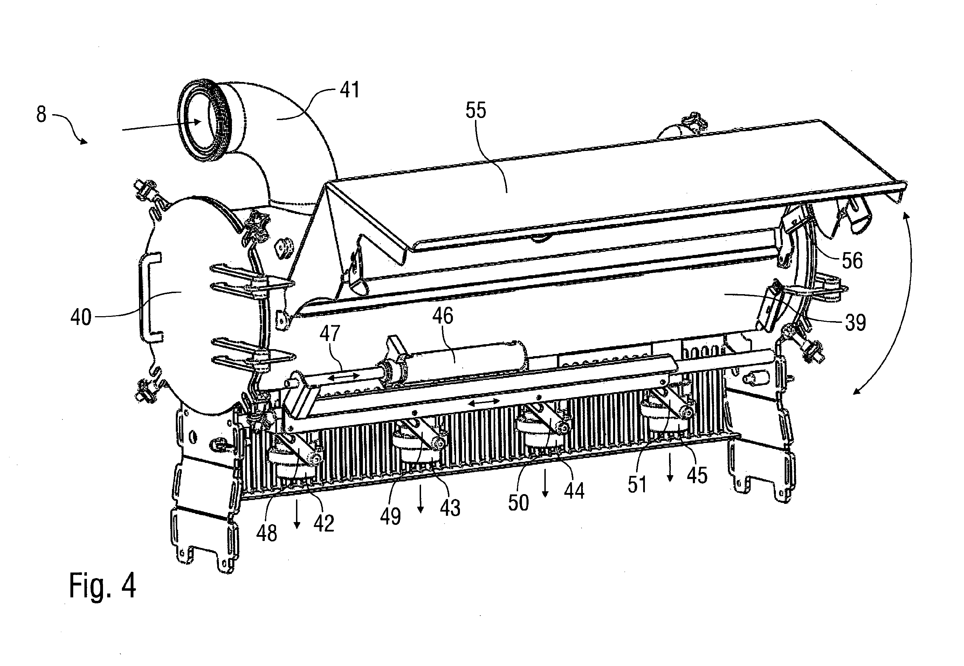

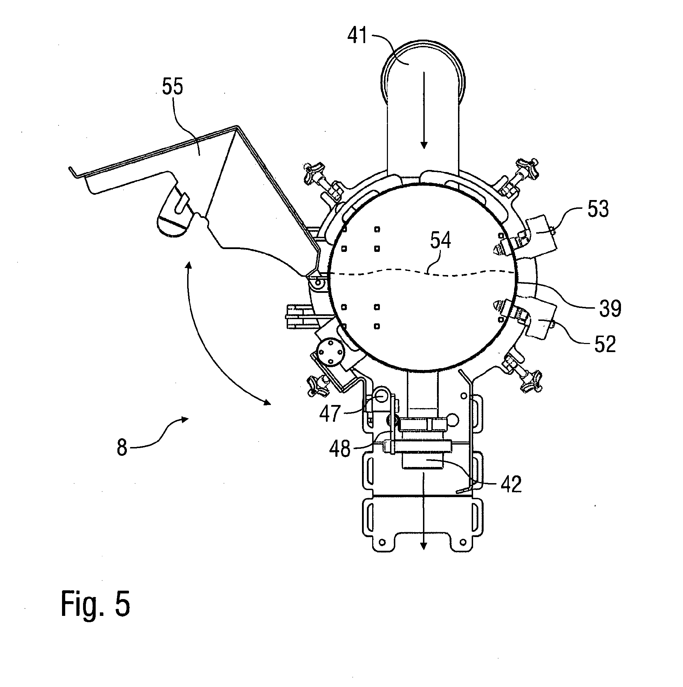

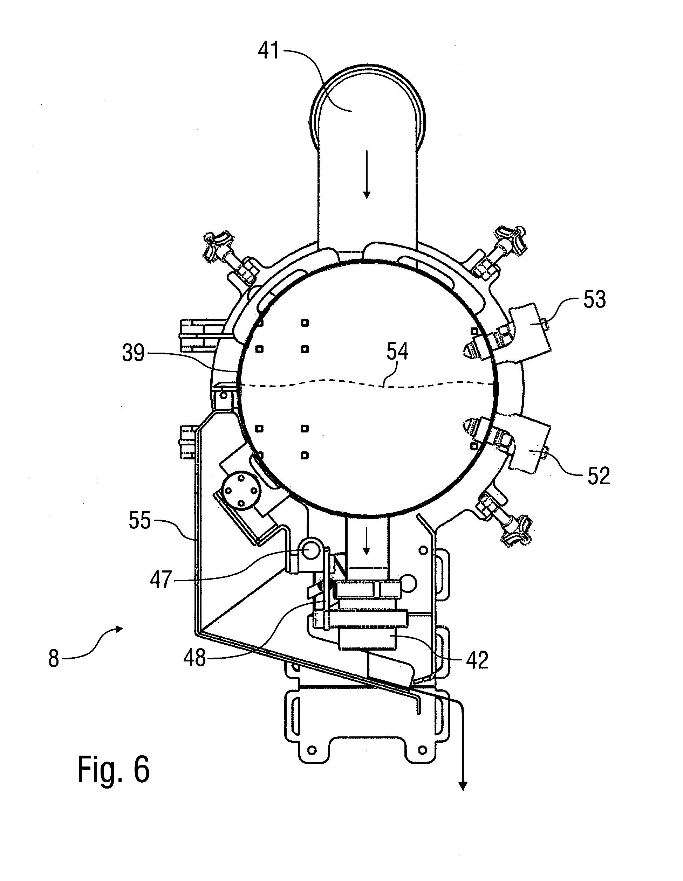

Moreover, the buffer arrangement 8 comprises a safety hatch 55, which can be swiveled between a closed operating position as shown in Figure 6 and an opened maintenance position as shown in Figures 4 and 5. The position of the safety hatch 55 can be detected by a position sensor 56.

### Air knife arrangement

Further, the food processing machine comprises an air knife arrangement which is used to blow off excess product. The air knife arrangement is arranged downstream the dipping conveyor 24 so that the air jets blown out from the air knife arrangement 9 blow off excess batter from the coated products.

The air knife arrangement 9 comprises an upper front air knife 57, an upper rear air knife 58, a lower front air knife 59 and a lower rear air knife 60. In other words, there are two air knives 57, 58 above the product line and two air knives 59, 60 below the product line. The air flow necessary for the operation of the air knives 57-60 is generated by two blowers 61, 62 which are attached to the support frame 1 below the conveyor arrangement 6. The blowers 61, 62 are connected to the air knives 57-60 via air hoses 63-66.

### Control system

The control system 10 comprises an electrical cabinet 67, a control panel 68 and an emergency stop 69.

### Method of operation

In the following, the method of operation of the food processing machine is explained with reference to the drawings.

During operation, uncoated food products (e.g. seafood, vegetables) are delivered in the direction of the arrows via the input conveyor 22 and the transfer conveyor 23 to the dipping conveyor 24. The dipping conveyor 24 conveys the uncoated food products through the dipping bath 7 so that the food products are coated with the batter within the dipping bath 7. Then, the dipping conveyor 24 removes the food products from the dipping bath 7 and transfers the coated food products to the transfer conveyor 25. Then, the air knife arrangement 9 blows off excess batter from the coated food products. Finally, the coated food products are discharged by the output conveyor 26.

The electrical cabinet 67 measures the filling level of the batter in the dipping bath 7 by polling the minimum filling level sensor 14 and the maximum filling level sensor 13.

If the filling level of the batter in the dipping bath 7 falls below the predetermined minimum filling level 12, the electrical cabinet 67 actuates the pressure cylinder 46 of the buffer arrangement 8 so that the outlet valves of the buffer arrangement 8 are opened. As a result, batter is discharged from the buffer tank 39 into the dipping bath 7 until the filling level of the batter in the dipping bath 7 exceeds the predetermined minimum filling level 12.

However, if the filling level of the batter in the dipping bath 7 exceeds the predetermined minimum filling level 12 or even the maximum filling level 11, the electrical cabinet 67 actuates the pressure cylinder 46 of the buffer arrangement 8 so that the outlet valves of the buffer arrangement 8 are closed. As a result, no further batter is discharged from the buffer arrangement 8 into the dipping bath 7.

Further, the electrical cabinet 67 also polls the lower filling level sensor 52 and the upper filling level sensor 53 of the buffer arrangement 8. If the filling level 54 of the batter in the buffer tank 39 falls below the predetermined lower filling level sensor 52, a refill signal is sent to the external source so that the buffer tank 39 is refilled.

Further, the electrical cabinet 67 also polls the temperature sensor 17 of the dipping bath 7. If the measured temperature exceeds a predetermined threshold, the electrical cabinet 67 activates the upper cooling labyrinth 18 and the lower cooling labyrinth 19 so that the temperature is reduced.

Although the invention has been described with reference to the particular arrangement of parts, features and the like, these are not intended to exhaust all possible arrangements of features, and indeed many other modifications and variations will be ascertainable to those of skill in the art. Particularly, the invention also claims protection for the subject-matter and the features of the independent claims independent from the referenced claims. Further, the invention comprises several aspects (e.g. buffer arrangement, air knife arrangement, control system and control method, configuration of the conveyor arrangement, etc.) which are independent from each other and constitute patentable subject-matter.

### List of reference signs:

- h: Height of product channel
- 1: Support frame
- 2: Roll
- 3: Roll
- 4: Roll
- 5: Roll
- 6: Conveyor arrangement
- 7: Dipping bath
- 8: Buffer arrangement
- 9: Air knife arrangement
- 10: Control system
- 11: Maximum filling level in the dipping bath
- 12: Minimum filling level in the dipping bath
- 13: Maximum filling level sensor of the dipping bath
- 14: Minimum filling level sensor of the dipping bath
- 15: Drain opening of the dipping bath
- 16: Drain valve of the dipping bath
- 17: Temperature sensor of the dipping bath
- 18: Upper cooling labyrinth of the dipping bath
- 19: Lower cooling labyrinth of the dipping bath
- 20: Coolant outlet tube
- 21: Coolant inlet tube
- 22: Input conveyor
- 23: Transfer conveyor between input conveyor and dipping conveyor
- 24: Dipping conveyor
- 25: Transfer conveyor between dipping conveyor and output conveyor
- 26: Output conveyor
- 27: Upper dipping conveyor
- 28: Lower dipping conveyor
- 29: Adjustment lever
- 30: Adjustment lever
- 31: Upstream section of output conveyor
- 32: Downstream section of output conveyor
- 33: Swivel axis
- 34: Guidance attached to upstream section
- 35: Guidance attached to downstream section
- 36: Guiding rod
- 37: Lower roller of output end of output conveyor
- 38: Upper roller of output end of output conveyor
- 39: Buffer tank
- 40: Cleaning hatch of buffer
- 41: Inlet of buffer
- 42: Outlet of buffer
- 43: Outlet of buffer
- 44: Outlet of buffer
- 45: Outlet of buffer
- 46: Pressure cylinder
- 47: Piston rod
- 48: Valve lever
- 49: Valve lever
- 50: Valve lever
- 51: Valve lever
- 52: Lower filling level sensor
- 53: Upper filling level sensor
- 54: Filling level of batter in the buffer tank
- 55: Safety hatch of buffer
- 56: Position sensor of safety hatch
- 57: Upper front air knife
- 58: Upper rear air knife
- 59: Lower front air knife
- 60: Lower rear air knife
- 61: Blower
- 62: Blower
- 63: Air hose
- 64: Air hose
- 65: Air hose
- 66: Air hose
- 67: Electrical cabinet
- 68: Control panel
- 69: Emergency stop

## Claims

1. Food processing machine for processing food products, particularly seafood or vegetables for producing tempura, comprising:
a) a dipping bath (7) containing a liquid or semi-liquid food material, particularly a batter; and
b) a conveyor arrangement (6) for conveying said food products through said dipping bath (7), so that said food products are coated with said food material in said dipping bath (7);
**characterized in that**
c) said conveyor arrangement (6) comprises a round belt conveyor (27, 28).

2. Food processing machine according to claim 1, wherein said conveyor arrangement (6) comprises:
a) an input conveyor (22) for receiving said uncoated food products, wherein the input conveyor (22) preferably comprises an adjustable inclination, and/or
b) a first transfer (23) conveyor which receives the uncoated products from the input conveyor (22), and/or
c) a dipping conveyor (24) arranged downstream the input conveyor (22), wherein said dipping conveyor (24) conveys said food products through said dipping bath (7), and/or
d) a second transfer conveyor (25) which receives the coated products from the dipping conveyor (24), and/or
e) an output conveyor (26) for outputting said food products coated with said liquid or semi-liquid food material, wherein the output conveyor (26) preferably comprises an adjustable inclination.

3. Food processing machine according to claim 2, wherein
a) said input conveyor (22) and/or said output conveyor (26) and/or said first transfer conveyor (23) and/or said second transfer conveyor (25) are wire belt conveyors; and/or
b) said dipping conveyor (24) is a round belt conveyor.

4. Food processing machine according to claim 2 or claim 3, wherein
a) said output conveyor (26) comprises an adjustable output end which can be adjusted between a sharp nose position and a butt nose position, and/or
b) the output conveyor (26) comprises an upper roller (38) and a lower roller (37) at the output end of the output conveyor (26), wherein the lower roller (37) can be shifted in the conveying direction in order to adjust either the butt nose position or the sharp nose position of the output end of the output conveyor (26).

5. Food processing machine according to any of claims 2 to 4, wherein
a) said dipping conveyor (24) comprises an upper dipping conveyor (27) and a lower dipping conveyor (28), wherein said upper dipping conveyor (27) is preferably movable between a lowered operating position and a raised maintenance position,
b) said upper dipping conveyor (27) and said lower dipping conveyor (28) together form a product channel in between, and
c) said product channel runs through said dipping bath (7) so that the complete cross section of the product channel is completely under the filling level in the dipping bath (7) at least at one point of the product channel, and/or
d) the product channel has an adjustable height (h).

6. Food processing machine according to claim 5, further comprising a cooling apparatus (18-21) for cooling the upper dipping conveyor (27) and/or the lower dipping conveyor (28), wherein the cooling apparatus (18-21) preferably comprises
a) an upper cooling labyrinth (18) for cooling the upper dipping conveyor (27) hanging in the dipping bath (7), and/or
b) a lower cooling labyrinth (19) for cooling the lower dipping conveyor (28), wherein the lower cooling labyrinth (19) is preferably arranged under the dipping bath (7).

7. Food processing machine according to any of the preceding claims, further comprising a buffer (8) for buffering said liquid or semi-liquid food material, wherein said buffer comprises an inlet (41) for receiving said liquid or semi-liquid food material from an external source and an outlet (42-45) for discharging said liquid or semi-liquid food material into said dipping bath (7);
wherein the buffer (8) is preferably arranged above the conveyor arrangement (6) and the outlet (42-45) of the buffer (8) comprises several outlet openings (42-45) being arranged across the conveyor arrangement (6), wherein the outlet valve preferably jointly opens or closes the outlet openings (42-45) of the buffer (8).

8. Food processing machine according to claim 7, wherein said buffer comprises:
a) at least a first filling level sensor (52, 53) for measuring a filling level (54) of said liquid or semi-liquid food material in said buffer (8), and/or
b) an outlet valve for controlling the flow of the liquid or semi-liquid food material from the buffer (8) into the dipping bath (7).

9. Food processing machine according to any of claims 7 to 8, wherein
a) the buffer (8) comprises a cleaning hatch (40) which can be opened for cleaning the interior of the buffer (8), and/or
b) the buffer (8) comprises a safety hatch (55) which can be moved between an opened maintenance position and a closed operating position, and/or
c) the buffer (8) comprises a sensor (56) detecting the position of the safety hatch (55), and/or
d) the liquid or semi-liquid food material leaving the outlet openings (42-45) of the buffer (8) impinges the inside of the safety hatch (55) when the safety hatch (55) is in the closed operating position.

10. Food processing machine according to any of the preceding claims, further comprising:
a) a temperature sensor (17) for measuring a temperature of the liquid or semi-liquid food material in the dipping bath (7), and/or
b) a second filling level sensor (13, 14) for measuring a filling level of the liquid or semi-liquid food material in the dipping bath (7), and/or
c) a drain outlet (15) in the dipping bath (7) and a drain valve (16) arranged in the drain outlet (15), and/or
d) a control unit (67) for controlling the operation of the food processing machine.

11. Food processing machine according to claim 10, wherein
a) an input side of the control unit (67) is connected to the first filling sensor (52, 53) of the buffer (8) and/or to the second filling level (13, 14) sensor of the dipping bath (7), while an output side of the control unit (67) is connected to the outlet valve of the buffer (8), so that the control unit (67) controls the filling level of the liquid or semi-liquid food material in the dipping bath (7), and/or
b) an input side of the control unit (67) is connected to the temperature sensor (17) of the dipping bath (7), while the output side of the control unit (67) is connected to the cooling apparatus (18, 19), so that the control unit (67) controls the temperature.

12. Food processing machine according to any of the preceding claims, further comprising at least one air knife (9) to blow off excess product, wherein the air knife (9) is arranged downstream the dipping bath (7),
wherein there are preferably two air knifes (57, 58) above the conveyor arrangement (6) and two air knifes (59, 60) below the conveyor arrangement (6).

13. Method of operation of a food processing machine, particularly according to any of the preceding claims, wherein the method comprises the following steps:
a) Filling a dipping bath (7) with a liquid or semi-liquid food material, particularly a batter, from an external source;
b) Dipping of food products into the dipping bath (7) containing the liquid or semi-liquid food material, so that the food products are coated with said liquid or semi-liquid food material in said dipping bath (7); and
c) Removing said coated food products from said dipping bath (7);
**characterized in that**
d) said food products are dipped into the dipping bath (7) by a round belt conveyor (27, 28).

14. Method according to claim 13, further comprising the following step:
Buffering said liquid or semi-liquid food material in a buffer (8) between the external source and the dipping bath (7).

15. Method of operation according to claim 14, wherein
a) the dipping of the food products is continued during refilling of the dipping bath (7) with the liquid or semi-liquid food material from the buffer (8), and/or
b) the dipping of the food products is continued during refilling of the buffer (8) with the liquid or semi-liquid food material from the external source.

16. Method of operation according to any of claims 14 to 15, further comprising the following steps:
a) Measuring a filling level of the liquid or semi-liquid food material in the dipping bath (7), and
b) controlling a flow of the liquid or semi-liquid food material from the buffer (8) into the dipping bath (7) depending on the measured filling level in the dipping bath (7).

17. Method of operation according to claim 14 to 16, further comprising the following steps:
a) Measuring a filling level of the liquid or semi-liquid food material in the buffer (8), and
b) controlling a flow of the liquid or semi-liquid food material from an external source into the buffer (8) depending on the measured filling level in the buffer (8).

18. Method of operation according to any of claims 13 to 17, further comprising the following steps:
a) Measuring a temperature in the dipping bath (7), and
b) controlling a cooling apparatus (18, 19) depending on the measured temperature.

## Patentansprüche

1. Nahrungsmittelverarbeitungsmaschine zur Verarbeitung von Nahrungsmittelprodukten, insbesondere Meeresfrüchten oder Gemüse zur Herstellung von Tempura, umfassend:
a) ein Tauchbad (7), das ein flüssiges oder halbflüssiges Nahrungsmittelmaterial enthält, insbesondere einen Teig, und
b) eine Förderanordnung (6) zum Fördern der Nahrungsmittelprodukte durch das Tauchbad (7), sodass die Nahrungsmittelprodukte in dem Tauchbad (7) mit dem Nahrungsmittelmaterial beschichtet werden,
**dadurch gekennzeichnet, dass**
c) die Förderanordnung (6) einen Rundriemenförderer (27, 28) aufweist.

2. Nahrungsmittelverarbeitungsmaschine gemäß Anspruch 1, wobei die Förderanordnung (6) aufweist:
a) einen Eingangsförderer (22) zur Aufnahme der unbeschichteten Nahrungsmittelprodukte, wobei der Eingangsförderer (22) vorzugsweise eine einstellbare Neigung aufweist, und/oder
b) einen ersten Transferförderer (23), der die unbeschichteten Produkte von dem Eingangsförderer (22) empfängt, und/oder
c) einen Tauchförderer (24), der stromabwärts hinter dem Eingangsförderer (22) angeordnet ist, wobei der Tauchförderer (24) die Nahrungsmittelprodukte durch das Tauchbad (7) fördert, und/oder
d) einen zweiten Transferförderer (25), der die beschichteten Produkte von dem Tauchförderer (24) empfängt und/oder
e) einen Ausgangsförderer (26) zur Ausgabe der Nahrungsmittelprodukte, die mit dem flüssigen oder halbflüssigen Nahrungsmittelmaterial beschichtet sind, wobei der Ausgangsförderer (26) vorzugsweise eine einstellbare Neigung aufweist.

3. Nahrungsmittelverarbeitungsmaschine gemäß Anspruch 2, wobei
a) der Eingangsförderer (22) und/oder der Ausgangsförderer (26) und/oder der erste Transferförderer (23) und/oder der zweite Transferförderer (25) Rundriemenförderer sind, und/oder
b) der Tauchförderer (24) ein Rundriemenförderer ist.

4. Nahrungsmittelverarbeitungsmaschine gemäß Anspruch 2 oder Anspruch 3, wobei
a) der Ausgangsförderer (26) ein einstellbares Abgabeende aufweist, das zwischen einer scharfnasigen Stellung und stumpfnasigen verstellbar ist, und/oder
b) der Ausgangsförderer (26) eine obere Rolle (38) und einer untere Rolle (37) am Abgabeende des Ausgangsförderers (26) aufweist, wobei die untere Rolle (37) in der Förderrichtung verschoben werden kann, um entweder die stumpfnasige Stellung oder die scharfnasige Stellung des Abgabeendes des Ausgangsförderers (26) einzustellen.

5. Nahrungsmittelverarbeitungsmaschine gemäß einem der Ansprüche 2 bis 4, wobei
a) der Tauchförderer (24) einen oberen Tauchförderer (27) und einen unteren Tauchförderer (28) aufweist, wobei der obere Tauchförderer (27) vorzugsweise beweglich ist zwischen einer abgesenkten Betriebsstellung und einer angehobenen Wartungsstellung,
b) der obere Tauchförderer (27) und der untere Tauchförderer (28) zusammen einen Produktkanal zwischen sich bilden, und
c) der Produktkanal durch das Tauchbad (7) läuft, sodass der vollständige Querschnitt des Produktkanals an zumindest einem Punkt des Produktkanals vollständig unter dem Füllstand des Tauchbades (7) liegt, und/oder
d) der Produktkanal eine einstellbare Höhe (h) hat.

6. Nahrungsmittelverarbeitungsmaschine gemäß Anspruch 5, weiterhin umfassend eine Kühleinrichtung (18-21) zum Kühlen des oberen Tauchförderers (27) und/oder des unteren Tauchförderers (28), wobei die Kühleinrichtung (18-21) vorzugsweise aufweist
a) ein oberes Kühllabyrinth (18) zum Kühlen des in das Tauchbad (7) hängenden oberen Tauchförderers (27), und/oder
b) ein unteres Kühllabyrinth (19) zum Kühlen des unteren Tauchförderers (28), wobei das untere Kühllabyrinth (19) vorzugsweise unter dem Tauchbad (7) angeordnet ist.

7. Nahrungsmittelverarbeitungsmaschine gemäß einem der vorangehenden Ansprüche, weiterhin umfassend einen Puffer (8) zum Puffern des flüssigen oder halbflüssigen Nahrungsmittelmaterials, wobei der Puffer einen Einlass (41) aufweist zur Aufnahme des flüssigen oder halbflüssigen Nahrungsmittelmaterials von einer externen Quelle und einen Auslass (42-45) zur Abgabe des flüssigen oder halbflüssigen Nahrungsmittelmaterials in das Tauchbad (7),
wobei der Puffer (8) vorzugsweise über der Förderanordnung (6) angeordnet ist und der Auslass (42-45) des Puffers (8) mehrere Auslassöffnungen (42-45) aufweist, die quer zur Förderanordnung (6) angeordnet sind, wobei das Auslassventil die Auslassöffnung (42-45) des Puffers (8) vorzugsweise gemeinsam öffnet oder schließt.

8. Nahrungsmittelverarbeitungsmaschine gemäß Anspruch 7, wobei der Puffer aufweist:
a) mindestens einen ersten Füllstandssensor (52, 53) zur Messung eines Füllstands (54) des flüssigen oder halbflüssigen Nahrungsmittelmaterials in dem Puffer (8), und/oder
b) ein Auslassventil zur Kontrolle des Flusses des flüssigen oder halbflüssigen Nahrungsmittelmaterials von dem Puffer (8) in das Tauchbad (7).

9. Nahrungsmittelverarbeitungsmaschine gemäß einem der Ansprüche 7 bis 8, wobei
a) der Puffer (8) eine Reinigungsklappe (40) aufweist, die zum Reinigen des Inneren des Puffers (8) geöffnet werden kann, und/oder
b) der Puffer (8) eine Sicherheitsklappe (55) aufweist, die zwischen einer geöffneten Wartungsstellung und einer geschlossenen Betriebsstellung beweglich ist, und/oder
c) der Puffer (8) einen Sensor (56) aufweist zum Erfassen der Position der Sicherheitsklappe (55), und/oder
d) das flüssige oder halbflüssige Nahrungsmittelmaterial, das die Auslassöffnungen (42-45) des Puffers (8) verlässt, auf die Innenseite der Sicherheitsklappe (55) auftrifft, wenn sich die Sicherheitsklappe (55) in der geschlossenen Betriebsstellung befindet.

10. Nahrungsmittelverarbeitungsmaschine gemäß einem der vorangehenden Ansprüche, weiterhin aufweisend:
a) einen Temperatursensor (17) zum Messen einer Temperatur des flüssigen oder halbflüssigen Nahrungsmittelmaterials in dem Tauchbad (7), und/oder
b) einen zweiten Füllstandssensor (13, 14) zur Messung eines Füllstandes des flüssigen oder halbflüssigen Nahrungsmittelmaterials in dem Tauchbad (7), und/oder
c) einen Abflussauslass (15) in dem Tauchbad (7) und ein Abflussventil (16), das in dem Abflussauslass (15) angeordnet ist, und/oder
d) eine Steuereinheit (67) zum Steuern des Betriebs der Nahrungsmittelverarbeitungsmaschine.

11. Nahrungsmittelverarbeitungsmaschine gemäß Anspruch 10, wobei
a) eine Eingangsseite der Steuereinheit (67) mit dem ersten Füllstandssensor (52, 53) des Puffers (8) und/oder dem zweiten Füllstandssensor (13, 14) des Tauchbades (7) verbunden ist, während eine Ausgangsseite der Steuereinheit (67) mit dem Auslassventil des Puffers (8) verbunden ist, sodass die Steuereinheit (67) den Füllstand des flüssigen oder halbflüssigen Nahrungsmittelmaterials in dem Tauchbad kontrolliert, und/oder
b) eine Eingangsseite der Steuereinheit (67) mit dem Temperatursensor (17) des Tauchbads (7) verbunden ist, während die Ausgangsseite der Steuereinheit (67) mit der Kühleinrichtung (18, 19) verbunden ist, sodass die Steuereinheit (67) die Temperatur kontrolliert.

12. Nahrungsmittelverarbeitungsmaschine gemäß einem der vorangehenden Ansprüche, weiterhin aufweisend mindestens ein Luftmesser (9) zum Wegblasen von überschüssigem Produkt, wobei das Luftmesser stromabwärts hinter dem Tauchbad (7) angeordnet ist, wobei es vorzugsweise zwei Luftmesser (57, 58) über der Fördereinrichtung (6) und zwei Luftmesser (59, 60) unter der Fördereinrichtung (6) gibt.

13. Betriebsverfahren einer Nahrungsmittelverarbeitungsmaschine, insbesondere gemäß einem der vorangehenden Ansprüche, wobei das Verfahren die folgenden Schritte aufweist:
a) Füllen eines Tauchbades (7) mit einem flüssigen oder halbflüssigen Nahrungsmittelmaterial, insbesondere einem Teig, aus einer externen Quelle,
b) Eintauchen von Nahrungsmittelprodukten in das Tauchbad (7), das das flüssige oder halbflüssige Nahrungsmittelmaterial enthält, sodass die Nahrungsmittelprodukte in dem Tauchbad (7) mit dem flüssigen oder halbflüssigen Nahrungsmittelmaterial beschichtet werden, und
c) Entfernen der beschichteten Nahrungsmittelprodukte aus dem Tauchbad (7),
**dadurch gekennzeichnet, dass**
d) die Nahrungsmittelprodukte mittels eines Rundriemenförderers (27, 28) in das Tauchbad (7) eingetaucht werden.

14. Verfahren gemäß Anspruch 13, weiterhin umfassend den folgenden Schritt:
Puffern des flüssigen oder halbflüssigen Nahrungsmittelmaterials in einem Puffer (8) zwischen der externen Quelle und dem Tauchbad (7).

15. Betriebsverfahren gemäß Anspruch 14, wobei
a) das Eintauchen der Nahrungsmittelprodukte während des Auffüllens des Tauchbades (7) mit dem flüssigen oder halbflüssigen Nahrungsmittelmaterial aus dem Puffer (8) fortgesetzt wird, und/oder
b) das Eintauchen der Nahrungsmittelprodukte während des Auffüllens des Puffers (8) mit dem flüssigen oder halbflüssigen Nahrungsmittelmaterial aus der externen Quelle fortgesetzt wird.

16. Betriebsverfahren gemäß einem der Ansprüche 14 bis 15, weiterhin umfassend die folgenden Schritte:
a) Messen eines Füllstandes des flüssigen oder halbflüssigen Nahrungsmittelmaterials in dem Tauchbad (7), und
b) Steuern eines Flusses des flüssigen oder halbflüssigen Nahrungsmittelmaterials aus dem Puffer (8) in das Tauchbad (7) in Abhängigkeit von dem gemessenen Füllstand in dem Tauchbad (7).

17. Betriebsverfahren gemäß Anspruch 14 bis 16, weiterhin umfassend die folgenden Schritte:
a) Messen eines Füllstandes des flüssigen oder halbflüssigen Nahrungsmittelmaterials in dem Puffer (8), und
b) Steuern eines Flusses des flüssigen oder halbflüssigen Nahrungsmittelmaterials von einer externen Quelle in den Puffer (8) in Abhängigkeit von dem gemessenen Füllstand in dem Puffer (8).

18. Betriebsverfahren gemäß einem der Ansprüche 13 bis 17, weiterhin umfassend die folgenden Schritte:
a) Messen einer Temperatur in dem Tauchbad (7), und
b) Steuern einer Kühleinrichtung (18, 19) in Abhängigkeit von der gemessenen Temperatur.

## Revendications

1. Machine de transformation de produits alimentaires pour transformer des produits alimentaires, particulièrement des fruits de mer ou des légumes pour la production de tempura, comprenant :
a) un bain d'immersion (7) contenant une matière alimentaire liquide ou semi-liquide, particulièrement une pâte à frire ; et
b) un agencement transporteur (6) pour transporter lesdits produits alimentaires à travers ledit bain d'immersion (7), de sorte que lesdits produits alimentaires soient enrobés avec ladite matière alimentaire dans ledit bain d'immersion (7) ;
**caractérisée en ce que**
c) ledit agencement transporteur (6) comprend un convoyeur à cordes (27, 28).

2. Machine de transformation de produits alimentaires selon la revendication 1, dans laquelle ledit agencement transporteur (6) comprend :
a) un transporteur d'entrée (22) pour recevoir lesdits produits alimentaires non enrobés, dans laquelle le transporteur d'entrée (22) comprend de préférence une inclinaison réglable, et/ou
b) un premier transporteur de transfert (23) qui reçoit les produits non enrobés à partir du transporteur d'entrée (22), et/ou
c) un transporteur d'immersion (24) agencé en aval du transporteur d'entrée (22), dans laquelle ledit transporteur d'immersion (24) transporte lesdits produits alimentaires à travers ledit bain d'immersion (7), et/ou
d) un second transporteur de transfert (25) qui reçoit les produits enrobés à partir du transporteur d'immersion (24), et/ou
e) un transporteur de sortie (26) pour faire sortir lesdits produits alimentaires enrobés avec ladite matière alimentaire liquide ou semi-liquide, dans laquelle le transporteur de sortie (26) comprend de préférence une inclinaison réglable.

3. Machine de transformation de produits alimentaires selon la revendication 2, dans laquelle
a) ledit transporteur d'entrée (22) et/ou ledit transporteur de sortie (26) et/ou ledit premier transporteur de transfert (23) et/ou ledit second transporteur de transfert (25) sont des transporteurs à courroies métalliques ; et/ou
b) ledit transporteur d'immersion (24) est un convoyeur à cordes.

4. Machine de transformation de produits alimentaires selon la revendication 2 ou la revendication 3, dans laquelle
a) ledit transporteur de sortie (26) comprend une extrémité de sortie réglable qui peut être réglée entre une position à pente directe descendante et une position à pente indirecte ascendante, et/ou
b) le transporteur de sortie (26) comprend un rouleau supérieur (38) et un rouleau inférieur (37) à l'extrémité de sortie du transporteur de sortie (26), dans laquelle le rouleau inférieur (37) peut être déplacé dans la direction de transport afin de régler soit la position à pente indirecte ascendante soit la position à pente directe descendante de l'extrémité de sortie du transporteur de sortie (26).

5. Machine de transformation de produits alimentaires selon l'une quelconque des revendications 2 à 4, dans laquelle
a) ledit transporteur d'immersion (24) comprend un transporteur d'immersion supérieur (27) et un transporteur d'immersion inférieur (28), dans laquelle ledit transporteur d'immersion supérieur (27) est de préférence mobile entre une position de fonctionnement abaissée et une position de maintenance élevée,
b) ledit transporteur d'immersion supérieur (27) et ledit transporteur d'immersion inférieur (28) forment ensemble un canal à produit entre ceux-ci, et
c) ledit canal à produit passe à travers ledit bain d'immersion (7) de sorte que la section transversale complète du canal à produit soit complètement en dessous du niveau de remplissage dans le bain d'immersion (7) au moins à un point du canal à produit, et/ou
d) le canal à produit possède une hauteur réglable (h).

6. Machine de transformation de produits alimentaires selon la revendication 5, comprenant en outre un appareil de refroidissement (18-21) pour refroidir le transporteur d'immersion supérieur (27) et/ou le transporteur d'immersion inférieur (28), dans laquelle l'appareil de refroidissement (18-21) comprend de préférence :
a) un circuit de refroidissement supérieur (18) pour refroidir le transporteur d'immersion supérieur (27) suspendu dans le bain d'immersion (7), et/ou
b) un circuit de refroidissement inférieur (19) pour refroidir le transporteur d'immersion inférieur (28), dans laquelle le circuit de refroidissement inférieur (19) est de préférence agencé en dessous du bain d'immersion (7).

7. Machine de transformation de produits alimentaires selon l'une quelconque des revendications précédentes, comprenant en outre un réservoir compensateur (8) pour compenser le volume de ladite matière alimentaire liquide ou semi-liquide, dans laquelle ledit réservoir compensateur comprend une entrée (41) pour recevoir ladite matière alimentaire liquide ou semi-liquide à partir d'une source externe et une sortie (42-45) pour évacuer ladite matière alimentaire liquide ou semi-liquide dans ledit bain d'immersion (7) ;
dans laquelle le réservoir compensateur (8) est de préférence agencé au-dessus de l'agencement transporteur (6) et la sortie (42-45) du réservoir compensateur (8) comprend plusieurs ouvertures de sortie (42-45) agencées à travers l'agencement transporteur (6), dans laquelle la valve de sortie ouvre ou ferme de préférence conjointement les ouvertures de sortie (42-45) du réservoir compensateur (8).

8. Machine de transformation de produits alimentaires selon la revendication 7, dans laquelle ledit réservoir compensateur comprend :
a) au moins un premier capteur de niveau de remplissage (52, 53) pour mesurer un niveau de remplissage (54) de ladite matière alimentaire liquide ou semi-liquide dans ledit réservoir compensateur (8), et/ou
b) une valve de sortie pour contrôler l'écoulement de la matière alimentaire liquide ou semi-liquide depuis le réservoir compensateur (8) dans le bain d'immersion (7).

9. Machine de transformation de produits alimentaires selon l'une quelconque des revendications 7 à 8, dans laquelle
a) le réservoir compensateur (8) comprend une trappe de nettoyage (40) qui peut être ouverte pour nettoyer l'intérieur du réservoir compensateur (8), et/ou
b) le réservoir compensateur (8) comprend une trappe de sécurité (55) qui peut être déplacée entre une position ouverte prévue pour la maintenance et une position fermée lorsque la machine est en fonctionnement, et/ou
c) le réservoir compensateur (8) comprend un capteur (56) détectant la position de la trappe de sécurité (55), et/ou
d) la matière alimentaire liquide ou semi-liquide évacuée par les ouvertures de sortie (42-45) du réservoir compensateur (8) entre en contact avec l'intérieur de la trappe de sécurité (55) lorsque la trappe de sécurité (55) est dans la position fermée lors du fonctionnement.

10. Machine de transformation de produits alimentaires selon l'une quelconque des revendications précédentes, comprenant en outre :
a) un capteur de température (17) pour mesurer une température de la matière alimentaire liquide ou semi-liquide dans le bain d'immersion (7), et/ou
b) un second capteur de niveau de remplissage (13, 14) pour mesurer un niveau de remplissage de la matière alimentaire liquide ou semi-liquide dans le bain d'immersion (7), et/ou
c) une sortie de drainage (15) dans le bain d'immersion (7) et une valve de drainage (16) agencée dans la sortie de drainage (15), et/ou
d) une unité de commande (67) pour commander le fonctionnement de la machine de transformation de produits alimentaires.

11. Machine de transformation de produits alimentaires selon la revendication 10, dans laquelle
a) l'entrée de l'unité de commande (67) est raccordée au premier capteur de niveau de remplissage (52, 53) du réservoir compensateur (8) et/ou au second capteur de niveau de remplissage (13, 14) du bain d'immersion (7), alors que la sortie de l'unité de commande (67) est raccordée à la valve de sortie du réservoir compensateur (8), de sorte que l'unité de commande (67) commande le niveau de remplissage de la matière alimentaire liquide ou semi-liquide dans le bain d'immersion (7), et/ou
b) l'entrée de l'unité de commande (67) est raccordée au capteur de température (17) du bain d'immersion (7), alors que la sortie de l'unité de commande (67) est raccordée à l'appareil de refroidissement (18, 19), de sorte que l'unité de commande (67) commande la température.

12. Machine de transformation de produits alimentaires selon l'une quelconque des revendications précédentes, comprenant en outre au moins une lame d'air (9) pour éliminer par soufflage un excès de produit, dans laquelle la lame d'air (9) est agencée en aval du bain d'immersion (7),
dans laquelle il y a de préférence deux lames d'air (57, 58) au-dessus de l'agencement transporteur (6) et deux lames d'air (59, 60) en-dessous de l'agencement transporteur (6).

13. Procédé de fonctionnement d'une machine de transformation de produits alimentaires, particulièrement selon l'une quelconque des revendications précédentes, dans lequel le procédé comprend les étapes suivantes :
a) le remplissage d'un bain d'immersion (7) avec une matière alimentaire liquide ou semi-liquide, particulièrement une pâte à frire, à partir d'une source externe ;
b) l'immersion de produits alimentaires dans le bain d'immersion (7) contenant la matière alimentaire liquide ou semi-liquide, de sorte que les produits alimentaires soient enrobés avec ladite matière alimentaire liquide ou semi-liquide dans ledit bain d'immersion (7) ; et
c) le retrait desdits produits alimentaires enrobés à partir dudit bain d'immersion (7) ;
**caractérisé en ce que**
d) lesdits produits alimentaires sont immergés dans le bain d'immersion (7) par un convoyeur à cordes (27, 28).

14. Procédé selon la revendication 13, comprenant en outre l'étape suivants :
le stockage à disposition immédiate de ladite matière alimentaire liquide ou semi-liquide dans un réservoir compensateur (8) entre la source externe et le bain d'immersion (7).

15. Procédé de fonctionnement selon la revendication 14, dans lequel
a) l'immersion des produits alimentaires se poursuit durant le re-remplissage du bain d'immersion (7) avec la matière alimentaire liquide ou semi-liquide à partir du réservoir compensateur (8), et/ou
b) l'immersion des produits alimentaires se poursuit durant le re-remplissage du réservoir compensateur (8) avec la matière alimentaire liquide ou semi-liquide à partir de la source externe.

16. Procédé de fonctionnement selon l'une quelconque des revendications 14 à 15, comprenant en outre les étapes suivantes :
a) la mesure d'un niveau de remplissage de la matière alimentaire liquide ou semi-liquide dans le bain d'immersion (7), et
b) la commande d'un écoulement de la matière alimentaire liquide ou semi-liquide à partir du réservoir compensateur (8) dans le bain d'immersion (7) en fonction du niveau de remplissage mesuré dans le bain d'immersion (7).

17. Procédé de fonctionnement selon les revendications 14 à 16, comprenant en outre les étapes suivantes :
a) la mesure d'un niveau de remplissage de la matière alimentaire liquide ou semi-liquide dans le réservoir compensateur (8), et
b) la commande d'un écoulement de la matière alimentaire liquide ou semi-liquide à partir d'une source externe dans le réservoir compensateur (8) en fonction du niveau de remplissage mesuré dans le réservoir compensateur (8).

18. Procédé de fonctionnement selon l'une quelconque des revendications 13 à 17, comprenant en outre les étapes suivantes :
a) la mesure d'une température dans le bain d'immersion (7), et
b) la commande d'un appareil de refroidissement (18, 19) en fonction de la température mesurée.
